# DEMANDE DE BREVET EUROPEEN

(11) **EP 4 793 451 A1**
(43) Date de publication de la demande: **19.08.2026**
(21) Numéro de dépôt: 26157896.7
(22) Date de dépôt: 11.02.2026
(51) Int. Cl.: E05F 15/63, H02K 11/21, H01H 3/16

(54) **ACTIONNEUR ÉLECTROMÉCANIQUE POUR UNE INSTALLATION DE FERMETURE ET INSTALLATION DE FERMETURE COMPRENANT UN TEL ACTIONNEUR ÉLECTROMÉCANIQUE**

(30) Priorité: 12.02.2025 FR 2501444
(71) Demandeur: Somfy Activites SA, 74300 Cluses (FR)
(72) Inventeur: ROUGIER-DROUET, Robin, 74300 Cluses (FR); PIMOUGUET, Olivier, 74300 Cluses (FR); RODOZ, Pierre-Louis, 74300 Cluses (FR)
(74) Mandataire: Lavoix

(57) **Abrégé**

Un actionneur (4) comprend une base (24), un moteur électrique (10), un arbre de sortie (36) et un dispositif de détection de position (58). Le dispositif (58) comprend un élément mobile (59) solidaire de l'arbre de sortie (36), une rainure de positionnement (60) ménagée dans la base (24), un élément de détection de position (61a) fixé sur l'élément mobile (59), un capteur (63a) configuré pour détecter une position de l'élément de détection (61a), et un plot de positionnement (64a). Le capteur (63a) est fixé sur le plot (64a). Le plot (64a) comprend une butée (69a) d'arrêt de l'élément mobile (59). La rainure (60) comprend une première surface (60a), une première denture interne (65) ménagée sur la première surface, une deuxième surface (60b) opposée à la première surface (60a), et une deuxième denture interne (67) ménagée sur la deuxième surface. Le plot (64a) comprend une première portion de denture (66) engagée dans la première denture (65), et une deuxième portion de denture (68) opposée à la première portion de denture (66) et engagée dans la deuxième denture (67).

## Description

La présente invention concerne un actionneur électromécanique pour une installation de fermeture, autrement dit un actionneur électromécanique d'une installation de fermeture.

La présente invention concerne également une installation de fermeture comprenant au moins un écran entraîné en déplacement par un tel actionneur électromécanique.

De manière générale, la présente invention concerne le domaine des portails battants comprenant un dispositif d'entraînement motorisé mettant en mouvement un écran suivant un mouvement de pivotement.

Le dispositif d'entraînement motorisé permet de mettre en mouvement l'écran, entre au moins une première position et au moins une deuxième position, par pivotement autour d'un axe vertical.

Le dispositif d'entraînement motorisé comprend au moins un actionneur électromécanique d'un élément mobile de fermeture, tel qu'un portail, une grille ou tout autre matériel équivalent, appelé par la suite écran.

On connaît déjà le document CN 215 108 279 U qui décrit un actionneur électromécanique pour une installation de fermeture. L'actionneur électromécanique comprend une base, un moteur électrique, un arbre de sortie et un dispositif de détection de position. L'arbre de sortie est entraîné en mouvement par le moteur électrique. Le dispositif de détection de position est configuré pour détecter une première position de fin de course de l'arbre de sortie et une deuxième position de fin de course de l'arbre de sortie. Le dispositif de détection de position comprend un élément mobile, une rainure de positionnement, deux éléments de détection de position, en l'occurrence magnétiques, et un capteur de détection de position, en l'occurrence à effet Hall. L'élément mobile est solidaire de l'arbre de sortie et mobile en rotation, autour d'un axe de rotation. La rainure de positionnement est en forme d'arc de cercle. Chaque élément de détection de position est fixé sur l'élément mobile, au moyen d'un élément de fixation. Le capteur de détection de position est configuré pour détecter une position angulaire de chacun des éléments de détection de position, autour de l'axe de rotation.

Cependant, ce document est muet concernant l'arrêt de l'arbre de sortie en cas de défaillance du capteur de détection de position.

Par ailleurs, dans la solution visée à être protégée dans le document CN 215 108 279 U, par rapport à la solution de l'art antérieur décrite dans la partie introductive de ce document, deux butées physiques, qui peuvent être réglées par vissage d'un arbre dans un trou fileté, ont été remplacées par les deux éléments de détection de position magnétiques et le capteur de détection de position à effet Hall.

Par conséquent, l'actionneur électromécanique du document CN 215 108 279 U est dépourvu de butées pour arrêter le mouvement de rotation de l'élément mobile et, par conséquent, de l'arbre de sortie.

Généralement, l'installation de fermeture comprend une butée, qui est fixée, soit au sol, soit sur l'actionneur électromécanique, pour arrêter le mouvement de rotation de l'écran, lors de l'atteinte d'une position de fin de course fermée. Dans un tel cas, un apprentissage de la position de course fermée est mis en œuvre en mesurant le courant traversant le moteur électrique, de sorte à déterminer une valeur seuil de courant. Suite à cet apprentissage, lorsque l'écran est entraîné en rotation par l'actionneur électromécanique en direction de la position de fin de course fermée, l'écran est arrêté lors du franchissement de la valeur seuil prédéterminée de courant.

Par conséquent, les opérations de mise en service de l'actionneur électromécanique et de l'installation de fermeture sont complexes et longues à mettre en œuvre.

On connaît également le document WO 2012/025173 A1 qui décrit un actionneur électromécanique pour déplacer une porte de meuble. L'actionneur électromécanique comprend une base, un moteur électrique, un arbre de sortie et un dispositif de détection de position. L'arbre de sortie est entraîné en mouvement par le moteur électrique. Le dispositif de détection de position est configuré pour détecter une première position de fin de course et une deuxième position de fin de course de l'arbre de sortie. Le dispositif de détection de position comprend un élément mobile, une rainure de positionnement, un premier élément de détection de position, un deuxième élément de détection de position, un premier capteur de détection de position et un deuxième capteur de détection de position. L'élément mobile et l'arbre de sortie forment une seule et même pièce. Chacun des premier et deuxième éléments de détection de position est fixé sur l'élément mobile, au moyen d'une vis. Le premier capteur de détection de position est configuré pour détecter une position du premier élément de détection de position. Le deuxième capteur de détection de position est configuré pour détecter une position du deuxième élément de détection de position. La rainure de positionnement est ménagée dans la base. Le dispositif de détection de position comprend, en outre, un premier plot de positionnement, qui fait partie intégrante du premier capteur de détection de position, et un deuxième plot de positionnement, qui fait partie intégrante du deuxième capteur de détection de position. Chacun des premier et deuxième plots de positionnement est maintenu en position par rapport à la rainure de positionnement. Le premier capteur de détection de position et le premier plot de positionnement forment une seule et même pièce. Le deuxième capteur de détection de position et le deuxième plot de positionnement forment une seule et même pièce. En outre, chacun des premier et deuxième plots de positionnement forme une butée d'arrêt de l'élément mobile.

Cet actionneur électromécanique présente l'inconvénient que la rainure de positionnement est lisse et dépourvue d'éléments de fixation.

Ce document enseigne uniquement que la position respective des premier et deuxième capteurs de détection de position est ajustée sur un rayon autour d'un axe de rotation et est verrouillée dans celle-ci.

On connaît également le document WO 2012/050427 A1 qui décrit un actionneur électromécanique pour une installation de fermeture. L'actionneur électromécanique comprend une base, un moteur électrique, un arbre de sortie et un dispositif de détection de position. L'arbre de sortie est entraîné en mouvement par le moteur électrique. Le dispositif de détection de position est configuré pour détecter une première position de fin de course et une deuxième position de fin de course de l'arbre de sortie. Le dispositif de détection de position comprend un élément mobile, des rainures de positionnement, un élément de détection de position, un premier capteur de détection de position et un deuxième capteur détection position. L'élément mobile est solidaire de l'arbre de sortie. L'élément de détection de position est fixé sur l'élément mobile. Le premier capteur de détection de position est configuré pour détecter une position de l'élément de détection de position. Le deuxième capteur de détection de position est configuré pour détecter une position de l'élément de détection de position. Les rainures de positionnement sont ménagées dans une plateforme stationnaire, qui est montée sur la base.

Cet actionneur électromécanique présente l'inconvénient que la première position de fin de course, respectivement la deuxième position de fin de course, est mise en œuvre par la détection d'un champ magnétique entre un aimant et le premier capteur de détection de position, respectivement le deuxième capteur de détection de position.

Par conséquent, il n'est pas prévu de butée d'arrêt sur le premier capteur de détection de position, respectivement sur le deuxième capteur de détection de position.

En outre, cet actionneur électromécanique présente l'inconvénient que la rainure de positionnement est lisse et dépourvue d'éléments de fixation.

On connaît également le document EP 0 585 525 B1 qui décrit un actionneur électromécanique pour une installation de fermeture. L'actionneur électromécanique comprend une base, un moteur électrique, un arbre de sortie et un dispositif de détection de position. L'arbre de sortie est entraîné par le moteur électrique. Un élément mobile est entraîné en rotation par rapport à l'arbre de sortie à une vitesse de rotation inférieure, au moyen d'un réducteur. Des premier et deuxième éléments de détection de position comprennent respectivement un pignon, qui est engrené avec une denture interne de l'élément mobile. Une rainure de positionnement est ménagée dans l'élément mobile.

Cet actionneur électromécanique présente l'inconvénient qu'une butée d'arrêt est disposée sur la plaque entre des premier et deuxième capteurs de détection de position. La butée d'arrêt, qui est indépendante des premier et deuxième capteurs de détection de position, est configurée pour être mise en appui avec les premier et deuxième éléments de détection de position, lorsque ceux-ci dépassent les premier et deuxième capteurs de détection de position, au cours d'une opération de réglage des première et deuxième positions de fin de course de l'arbre de sortie.

La présente invention a pour but de résoudre les inconvénients précités et de proposer un actionneur électromécanique pour une installation de fermeture, ainsi qu'une installation de fermeture comprenant un tel actionneur électromécanique, permettant de simplifier la mise en service de l'actionneur électromécanique et, par conséquent, de l'installation de fermeture en réduisant le nombre d'étapes de réglage de la ou des positions de fin de course et de la ou des butées.

A cet égard, la présente invention vise, selon un premier aspect, un actionneur électromécanique pour une installation de fermeture,
l'actionneur électromécanique comprenant au moins :
   - une base,
   - un moteur électrique,
   - un arbre de sortie, l'arbre de sortie étant entraîné en mouvement par le moteur électrique, et
   - un dispositif de détection de position, le dispositif de détection de position étant configuré pour détecter au moins une première position de fin de course de l'arbre de sortie,
le dispositif de détection de position comprenant au moins :
   - un élément mobile, l'élément mobile étant solidaire de l'arbre de sortie,
   - une rainure de positionnement, la rainure de positionnement étant ménagée dans la base,
   - un premier élément de détection de position, le premier élément de détection de position étant fixé sur l'élément mobile, au moyen d'au moins un élément de fixation,
   - un premier capteur de détection de position, le premier capteur de détection de position étant configuré pour détecter une position du premier élément de détection de position, et
   - un premier plot de positionnement, le premier plot de positionnement étant maintenu en position par rapport à la rainure de positionnement dans une première position, le premier capteur de détection de position étant fixé sur le premier plot de positionnement,
le premier plot de positionnement comprenant au moins une première butée d'arrêt de l'élément mobile.

Selon l'invention, la rainure de positionnement comprend au moins :
- une première denture interne,
- une première surface, la première denture interne étant ménagée sur la première surface,
- une deuxième surface, la deuxième surface étant opposée à la première surface, et
- une deuxième denture interne, la deuxième denture interne étant ménagée sur la deuxième surface.

Le premier plot de positionnement comprend au moins :
- une première portion de denture, et
- une deuxième portion de denture, la deuxième portion de denture étant opposée à la première portion de denture.

La première portion de denture est engagée dans la première denture interne.

En outre, la deuxième portion de denture est engagée dans la deuxième denture
interne.

Ainsi, cette construction de l'actionneur électromécanique permet de simplifier la mise en service de l'actionneur électromécanique et, par conséquent, de l'installation de fermeture en réduisant le nombre d'étapes de réglage d'au moins la première position de fin de course de l'arbre de sortie et la première butée.

En outre, cette construction de l'actionneur électromécanique permet que le premier capteur de détection de position et la première butée soient intégrés au plus près l'un de l'autre et, en l'occurrence, au niveau du premier plot de positionnement, qui est destiné à être inséré dans la rainure de positionnement de la base.

De cette manière, le premier plot de positionnement, d'une part, supporte le premier capteur de détection de position et, d'autre part, comporte la première butée, de sorte à pouvoir régler dans un même temps la position du premier capteur de détection de position et la position de la première butée par rapport à la rainure de positionnement.

Par ailleurs, l'engagement de la première portion de denture dans la première denture interne et de la deuxième portion de denture dans la deuxième denture interne permet de garantir un positionnement stable et robuste du premier plot de positionnement par rapport à la rainure de positionnement, tout en permettant de régler facilement la position du premier plot de positionnement par rapport à la rainure de positionnement, selon un pas défini par les première et deuxième portions de denture et les première et deuxième dentures internes.

Selon une caractéristique avantageuse de l'invention, le premier élément de détection de position comprend au moins un trou de passage. L'élément mobile comprend au moins un trou de fixation. En outre, l'élément de fixation traverse le trou de passage et est fixé dans le trou de fixation.

Selon une autre caractéristique avantageuse de l'invention, le trou de passage est de forme oblongue, de sorte à pouvoir ajuster le positionnement du premier élément de détection de position par rapport à l'élément mobile, lors de la fixation de l'élément de fixation dans le trou de fixation.

Selon une autre caractéristique avantageuse de l'invention, le premier capteur de détection de position est un interrupteur mécanique. Le premier capteur de détection de position comprend au moins une lame métallique déformable. Le premier élément de détection de position est configuré pour être mis en appui contre la lame métallique déformable, lors de l'entraînement en mouvement de l'élément mobile.

Selon une autre caractéristique avantageuse de l'invention, le premier capteur de détection de position est un capteur à effet Hall. En outre, le dispositif de détection de position est configuré pour détecter le positionnement du premier élément de détection de position en vis-à-vis du premier capteur de détection de position, lors de l'entraînement en mouvement de l'élément mobile.

Selon une autre caractéristique avantageuse de l'invention, le dispositif de détection de position comprend, en outre :
- un deuxième élément de détection de position, le deuxième élément de détection de position étant fixé sur l'élément mobile au moyen d'au moins un autre élément de fixation,
- un deuxième capteur de détection de position, le deuxième capteur de détection de position étant configuré pour détecter une position du deuxième élément de détection de position, et
- un deuxième plot de positionnement, le deuxième plot de positionnement étant maintenu en position par rapport à la rainure de positionnement dans une deuxième position, la deuxième position étant différente de la première position, le deuxième capteur de détection de position étant fixé sur le deuxième plot de positionnement.

En outre, le deuxième plot de positionnement comprend au moins une deuxième butée d'arrêt de l'élément mobile.

La présente invention vise, selon un deuxième aspect, une installation de fermeture comprenant au moins :
- un portail battant, et
- un dispositif d'entraînement motorisé,

le portail battant comprenant au moins :
   - un pilier, et
   - un écran,
le dispositif d'entraînement motorisé comprenant au moins :
   - un actionneur électromécanique, conforme à l'invention et tel que mentionné ci-dessus, l'actionneur électromécanique étant configuré pour entraîner en déplacement l'écran par un mouvement de rotation, autour d'un axe de rotation.

Cette installation de fermeture présente des caractéristiques et avantages analogues à ceux décrits précédemment en relation avec l'actionneur électromécanique selon l'invention et tel que mentionné ci-dessus.

Selon une autre caractéristique avantageuse de l'invention, le portail battant comprend :
- deux piliers, et
- deux écrans,
le dispositif d'entraînement motorisé comprend :
- deux actionneurs électromécaniques, chacun des actionneurs électromécaniques étant configuré pour entraîner en déplacement l'un des écrans par un mouvement de rotation, autour d'un axe de rotation.

Chacun des actionneurs électromécaniques est conforme à l'invention et tel que mentionné ci-dessus. En outre, chacun des actionneurs électromécaniques est réversible, de sorte à pouvoir être fixé sur l'un ou l'autre des piliers et à pouvoir être relié mécaniquement à l'un ou l'autre des écrans.

D'autres particularités et avantages de l'invention apparaîtront encore dans la description ci-après, faite en référence aux dessins annexés, donnés à titre d'exemples non limitatifs et dans lesquels :
[Fig 1] la figure 1 est une vue schématique en perspective d'une installation de fermeture conforme à un mode de réalisation de l'invention, l'installation comprenant un portail battant, équipé de deux piliers et de deux écrans, et un dispositif d'entraînement motorisé, équipé de deux actionneurs électromécaniques conformes à l'invention ;
[Fig 2] la figure 2 est une vue schématique de dessus d'une partie de l'installation de fermeture illustrée à la figure 1 ;
[Fig 3] la figure 3 est une vue schématique en perspective et partiellement éclatée de l'un des deux actionneurs électromécaniques, où un capot a été ôté ;
[Fig 4] la figure 4 est une vue schématique en perspective de l'actionneur électromécanique, analogue à celle de la figure 3, selon un angle de vue différent ; et
[Fig 5] la figure 5 est une vue schématique en perspective de l'actionneur électromécanique, analogue à celle des figures 3 et 4, selon un angle de vue différent et où une base et un enjoliveur ont été ôtés.

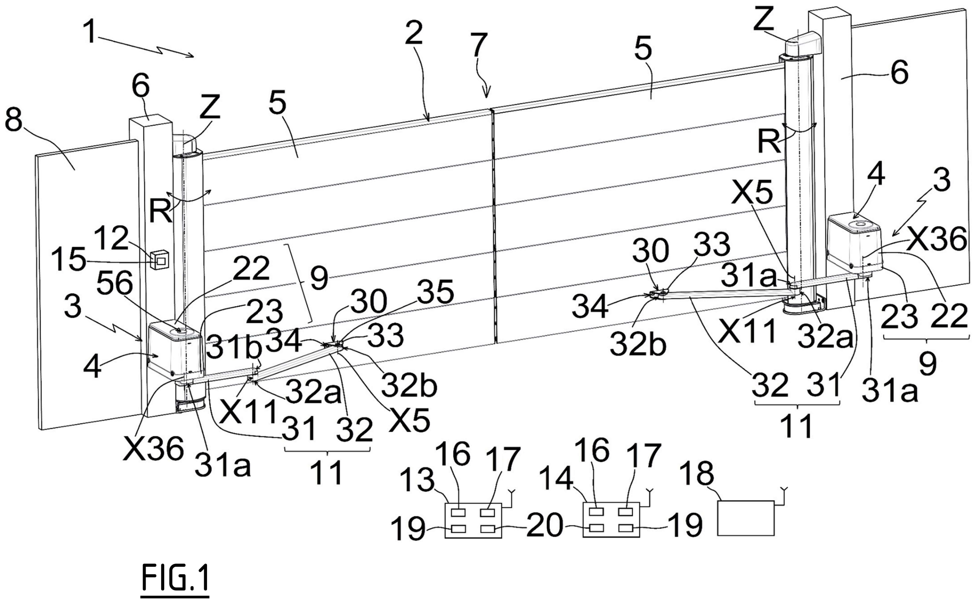

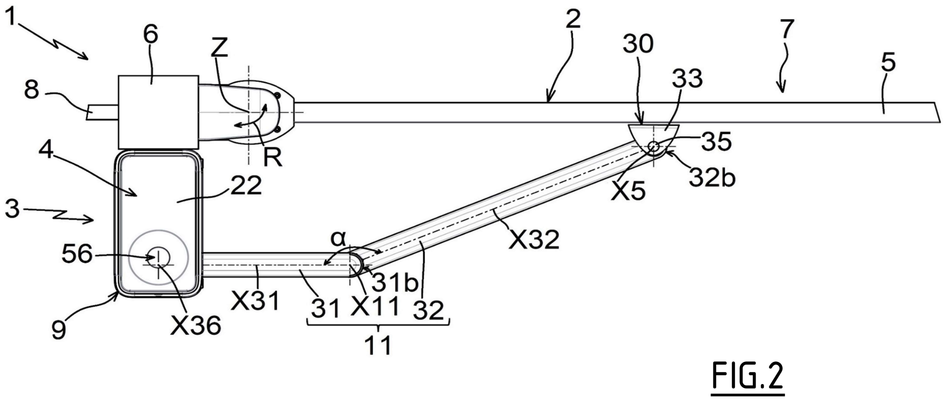

On décrit tout d'abord, en référence aux figures 1 et 2, une installation de fermeture 1 conforme à un mode de réalisation de l'invention.

L'installation de fermeture 1 comprend un portail battant 2 et un dispositif d'entraînement motorisé 3.

Le portail battant 2 est installé au niveau d'une ouverture 7 réalisée dans une clôture 8, en particulier entre deux piliers 6 de la clôture 8. Le portail battant 2 permet d'obturer sélectivement l'ouverture 7.

En variante, non représentée, l'ouverture 7 est réalisée dans un bâtiment.

Le portail battant 2 de l'installation de fermeture 1 est une barrière mobile par pivotement dans un plan horizontal.

Le portail battant 2 comprend au moins un écran 5.

Ici et comme illustré à la figure 1, le portail battant 2 comprend deux écrans 5.

En variante, non représentée, le portail battant 2 comprend un seul écran 5.

Le ou chaque écran 5 est configuré pour être monté, autrement dit est monté, pivotant, autour d'un axe de rotation Z, en particulier dans une configuration assemblée de l'installation de fermeture 1. L'axe de rotation Z est théoriquement vertical et perpendiculaire au sol, autrement dit au plan de la figure 2, dans la configuration assemblée de l'installation de fermeture 1.

Le dispositif d'entraînement motorisé 3 comprend au moins un actionneur électromécanique 4.

Ici et comme illustré à la figure 1, le dispositif d'entraînement motorisé 3 comprend deux actionneurs électromécaniques 4.

Le nombre d'actionneurs électromécaniques n'est pas limitatif et peut être différent. Il peut être, par exemple, égal à un et, en particulier, est dépendant du nombre d'écrans du portail battant.

Le ou chaque actionneur électromécanique 4 est configuré pour déplacer, autrement dit entraîne en déplacement, le ou l'un des écrans 5 du portail battant 2 par un mouvement de rotation R, autour du ou de l'un des axes de rotation Z, comme illustré aux figures 1 et 2.

Ainsi, le ou chaque écran 5 du portail battant 2 est entraîné en déplacement par le dispositif d'entraînement motorisé 3 et, plus particulièrement, par le ou l'un des actionneurs électromécaniques 4.

En outre, le ou chaque écran 5 est monté oscillant autour du ou de l'un des axes de rotation Z.

Le dispositif d'entraînement motorisé 3 met en mouvement le ou chaque écran 5 du portail battant 2, entre au moins une première position et au moins une deuxième position, correspondant respectivement à une position fermée et à une position ouverte.

Ainsi, le ou chaque écran 5 est entraîné par le ou l'un des actionneurs électromécaniques 4 et est mobile entre sa position ouverte et sa position fermée, et inversement.

Ici, le ou chaque écran 5 est un élément mobile de fermeture, tel qu'un portail, une grille ou tout autre matériel équivalent.

Avantageusement, les deux actionneurs électromécaniques 4 de l'installation de fermeture 1 sont identiques.

Ainsi, ce qui est décrit ci-après pour un actionneur électromécanique 4 s'applique au ou à chaque actionneur électromécanique 4 de l'installation de fermeture 1, en fonction du nombre d'actionneurs électromécaniques 4 appartenant à l'installation de fermeture 1.

Avantageusement, chacun des actionneurs électromécaniques 4 est réversible, de sorte à pouvoir être fixé sur l'un ou l'autre des piliers 6 et à pouvoir être relié mécaniquement à l'un ou l'autre des écrans 5.

Avantageusement, l'actionneur électromécanique 4 comprend un premier dispositif de fixation, non représenté, et un deuxième dispositif de fixation 30. Le premier dispositif de fixation est relié, autrement dit est configuré pour être relié, au pilier 6, en particulier dans la configuration assemblée de l'installation de fermeture 1. En outre, le deuxième dispositif de fixation 30 est relié, autrement dit est configuré pour être relié, à l'écran 5, en particulier dans la configuration assemblée de l'installation de fermeture 1.

Avantageusement, le premier dispositif de fixation comprend au moins une platine. En outre, la platine est fixée, autrement dit est configurée pour être fixée, sur le pilier 6, en particulier dans la configuration assemblée de l'installation de fermeture 1.

Avantageusement, la fixation de la platine sur le pilier 6 est mise en œuvre au moyen de vis de fixation, non représentées.

Avantageusement, l'actionneur électromécanique 4 est fixé, autrement dit est configuré pour être fixé, sur la platine, en particulier dans la configuration assemblée de l'installation de fermeture 1.

Avantageusement, la fixation de l'actionneur électromécanique 4 sur la platine est mise en œuvre au moyen de vis de fixation, non représentées.

Avantageusement, le deuxième dispositif de fixation 30 comprend au moins une équerre 33. En outre, l'équerre 33 est fixée, autrement dit est configurée pour être fixée, sur l'écran 5, en particulier dans la configuration assemblée de l'installation de fermeture 1.

Dans un exemple de réalisation, la fixation de l'équerre 33 sur l'écran 5 est mise en œuvre au moyen d'éléments de fixation par vissage, non représentés, en particulier au nombre de deux. Chaque élément de fixation traverse un trou de passage 34 ménagé dans l'équerre 33 et est vissé dans un trou de vissage, non représenté, ménagé dans l'écran 5.

Le nombre et le type d'éléments de fixation de l'équerre sur l'écran ne sont pas limitatifs et peuvent être différents. Ces éléments de fixation peuvent être, par exemple, en nombre supérieur ou égal à trois. Ils peuvent être également, par exemple, des éléments de fixation par rivetage ou par soudage.

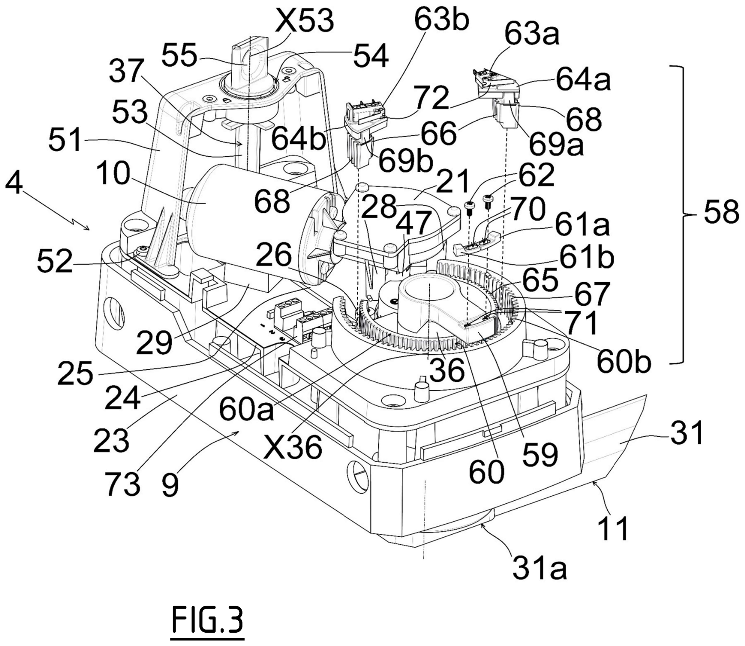

On décrit à présent, plus en détail et en référence aux figures 3 à 5, l'un des deux actionneurs électromécaniques 4 appartenant à l'installation de fermeture 1 illustrée aux figures 1 et 2, selon le mode de réalisation de l'invention.

L'actionneur électromécanique 4 comprend au moins un moteur électrique 10.

Le moteur électrique 10 est représenté par son enveloppe et sans détails sur ses éléments constitutifs internes.

Avantageusement, l'actionneur électromécanique 4 comprend, en outre, au moins un réducteur 21.

Le réducteur 21 est représenté par son enveloppe et sans détails sur ses éléments constitutifs internes.

Avantageusement, le réducteur 21 comprend au moins un étage de réduction. Ce ou ces étages de réduction peuvent être un train d'engrenages de type épicycloïdal et/ou une roue et sans fin.

Le type et le nombre d'étages de réduction du réducteur ne sont pas limitatifs.

Ici, le réducteur 21 est de type irréversible.

En variante, non représentée, le réducteur 21 est de type réversible.

Avantageusement, l'actionneur électromécanique 4 comprend, en outre, au moins un carter 9.

Ici, le moteur électrique 10 et, éventuellement, le réducteur 21 sont montés, autrement dit sont configurés pour être logés, à l'intérieur du carter 9, en particulier dans une configuration assemblée de l'actionneur électromécanique 4.

Avantageusement, le carter 9 comprend au moins un capot 22 et, éventuellement, un enjoliveur 23.

L'actionneur électromécanique 4 comprend, en outre, une base 24.

Ici, l'enjoliveur 23est fixé, autrement dit est configuré pour être fixé, sur la base 24, au moyen d'éléments de fixation 57, en particulier dans la configuration assemblée de l'actionneur électromécanique 4.

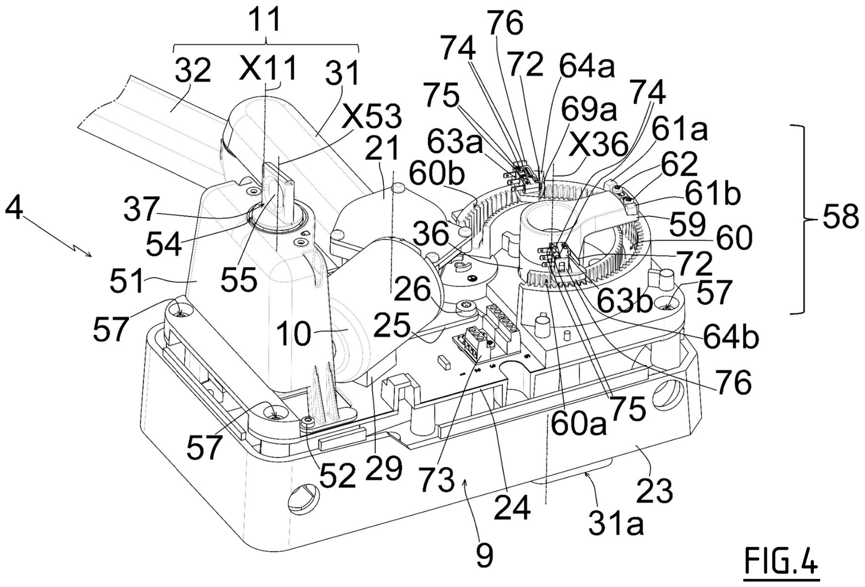

Ici, les éléments de fixation 57 de l'enjoliveur 23 sur la base 24 sont des vis de fixation, en particulier au nombre de quatre, dont trois sont visibles à la figure 4. Chaque élément de fixation 57 traverse un trou de passage, non représenté, ménagé dans la base 24 et est vissé dans un fût de vissage, non représenté, ménagé dans l'enjoliveur 23.

Le nombre et le type des éléments de fixation de l'enjoliveur sur la base ne sont pas limitatifs et peuvent être différents. Ces éléments de fixation peuvent être, par exemple, en nombre supérieur ou égal à cinq. Ils peuvent être également, par exemple, des éléments de fixation par rivetage ou par encliquetage élastique.

En variante, non représentée, la base 24 et l'enjoliveur 23 ne forment qu'une seule pièce. Autrement dit, la base 24 et l'enjoliveur 23 constituent une pièce monobloc.

Avantageusement, le moteur électrique 10 et, éventuellement, le réducteur 21 sont solidaires, autrement dit sont configurés pour être solidaires, de la base 24, en particulier dans la configuration assemblée de l'actionneur électromécanique 4.

Avantageusement, l'actionneur électromécanique 4 comprend, en outre, une platine 25.

Avantageusement, la platine 25 est fixée, autrement dit est configurée pour être fixée, sur la base 24, au moyen d'éléments de fixation 26, en particulier dans la configuration assemblée de l'actionneur électromécanique 4.

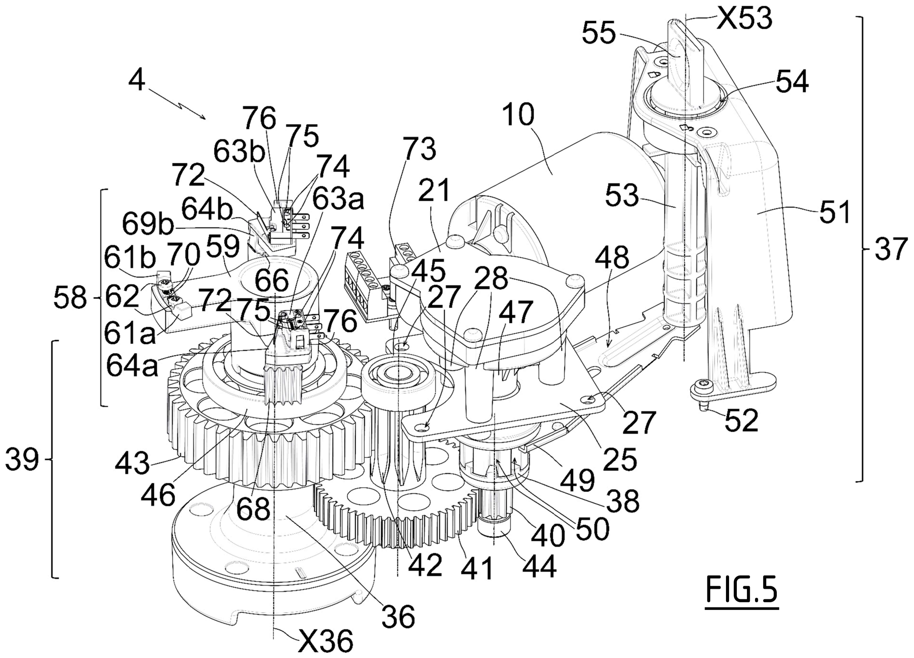

Ici, les éléments de fixation 26 de la platine 25 sur la base 24 sont des vis de fixation, en particulier au nombre de quatre, dont une seule est visible aux figures 3 et 4. Chaque élément de fixation 26 traverse un trou de passage 27 ménagé dans la platine 25 et est vissé dans un trou de vissage, non représenté, ménagé dans la base 24. L'emplacement de trois des éléments de fixation 26 est représenté sur la figure 5 par les trous de passage 27 visibles sur cette figure.

Le nombre et le type des éléments de fixation de la platine sur la base ne sont pas limitatifs et peuvent être différents. Ces éléments de fixation peuvent être, par exemple, en nombre égal à trois ou supérieur ou égal à cinq. Ils peuvent être également, par exemple, des éléments de fixation par rivetage ou par encliquetage élastique.

En variante, non représentée, la base 24 et la platine 25 ne forment qu'une seule pièce. Autrement dit, la base 24 et la platine 25 constituent une pièce monobloc.

Ici, le moteur électrique 10 est assemblé, autrement dit est configuré pour être assemblé, avec le réducteur 21, en particulier dans la configuration assemblée de l'actionneur électromécanique 4.

Avantageusement, le moteur électrique 10 comprend un arbre de sortie, non représenté.

Avantageusement, le réducteur 21 comprend un arbre d'entrée, non représenté, et un arbre de sortie 47.

Avantageusement, l'arbre de sortie du moteur électrique 10 est accouplé avec l'arbre d'entrée du réducteur 21.

Avantageusement, le réducteur 21 est monté, autrement dit est configuré pour être monté, sur la base 24 et, plus particulièrement, sur la platine 25, au moyen de colonnes 28, en l'occurrence au nombre de trois, en particulier dans la configuration assemblée de l'actionneur électromécanique 4.

Ainsi, le réducteur 21 est maintenu en position par rapport à la base 24, et plus particulièrement, à la platine 25 au moyen des colonnes 28.

Le nombre de colonnes n'est pas limitatif et peut être différent. Il peut être, par exemple, supérieur ou égal à quatre.

Avantageusement, la base 24 comprend une cale 29. En outre, le moteur électrique 10 est en appui, autrement dit est configuré pour être en appui, contre la cale 29, en particulier dans la configuration assemblée de l'actionneur électromécanique 4.

Ainsi, le moteur électrique 10 est maintenu en position par rapport à la base 24 au moyen de la cale 29.

Avantageusement, l'actionneur électromécanique 4 comprend, en outre, un système de transmission de mouvement 11.

Avantageusement, le système de transmission de mouvement **11** comprend un premier bras 31 et un deuxième bras 32. Le premier bras 31 peut également être appelé bras d'entraînement et le deuxième bras 32 peut également être appelé bras entraîné.

Avantageusement, le deuxième bras 32 du système de transmission **11** est relié, autrement dit est configuré pour être relié, à l'équerre 33, en particulier dans la configuration assemblée de l'installation de fermeture 1.

Dans un exemple de réalisation, la liaison entre le deuxième bras 32 et l'équerre 33 est mise en œuvre au moyen d'une articulation de type pivot réalisée par un arbre 35.

L'actionneur électromécanique 4 comprend, en outre, un arbre de sortie 36. En outre, l'arbre de sortie 36 est entraîné en mouvement, autrement dit est configuré pour être entraîné en mouvement, dans l'exemple de réalisation en rotation, par le moteur électrique 10 et, éventuellement, le réducteur 21, en particulier dans la configuration assemblée de l'actionneur électromécanique 4.

Avantageusement, le réducteur 21 est monté, autrement dit est configuré pour être monté, entre le moteur électrique 10 et l'arbre de sortie 36, en particulier dans la configuration assemblée de l'actionneur électromécanique 4.

Avantageusement, le moteur électrique 10 est configuré pour entraîner en mouvement, en particulier en rotation, de manière réversible l'arbre de sortie 36, au travers du réducteur 21. Plus particulièrement, le moteur électrique 10 est configuré pour entraîner en mouvement, en particulier en rotation, l'écran 5, dans un sens de rotation horaire et dans un sens de rotation antihoraire, vu dans un plan perpendiculaire à l'axe de rotation Z.

On note X36 l'axe de rotation de l'arbre de sortie 36 de l'actionneur électromécanique 4

Ici, l'axe de rotation X36 de l'arbre de sortie 36 est parallèle à l'axe de rotation Z de l'écran 5.

Avantageusement, le premier bras 31 comprend une première extrémité 31a et une deuxième extrémité 31b. La deuxième extrémité 31b est opposée à la première extrémité 31a.

Avantageusement, le deuxième bras 32 comprend une première extrémité 32a et une deuxième extrémité 32b. La deuxième extrémité 32b est opposée à la première extrémité 32a.

Avantageusement, la première extrémité 31a du premier bras 31 est reliée mécaniquement, autrement dit est configurée pour être reliée mécaniquement, à l'arbre de sortie 36, en particulier dans la configuration assemblée de l'actionneur électromécanique 4.

Ainsi, le premier bras 31 est solidaire de l'arbre de sortie 36.

Ici, l'arbre de sortie 36 traverse, autrement dit est configuré pour traverser, la base 24, en particulier dans la configuration assemblée de l'actionneur électromécanique 4.

Dans un exemple de réalisation, le premier bras 31 comprend un alésage, non représenté. En outre, l'arbre de sortie 36 est emmanché, autrement dit est configuré pour être emmanché, dans l'alésage du premier bras 31, en particulier dans la configuration assemblée de l'actionneur électromécanique 4.

Le type de liaison de fixation entre le premier bras et l'arbre de sortie n'est pas limitatif et peut être différent. Il peut être, par exemple, mis en œuvre par une denture externe ménagée au niveau de l'arbre de sortie coopérant, autrement dit configurée pour coopérer, avec une denture interne de l'alésage du premier bras.

Avantageusement, la deuxième extrémité 31b du premier bras 31 est articulée, autrement dit est configurée pour être articulée, par rapport à la première extrémité 32a du deuxième bras 32, autour d'un axe de rotation X11, en particulier dans la configuration assemblée de l'actionneur électromécanique 4.

Ici, l'axe de rotation X11 de l'articulation entre la deuxième extrémité 31b du premier bras 31 et la première extrémité 32a du deuxième bras 32 est parallèle à l'axe de rotation Z de l'écran 5, ainsi qu'à l'axe de rotation X36 de l'arbre de sortie 36.

Avantageusement, le deuxième bras 32 est libre en rotation par rapport au premier bras 31, autour de l'axe de rotation X11.

Avantageusement, la deuxième extrémité 32b du deuxième bras 32 est articulée, autrement dit est configurée pour être articulée, par rapport à l'écran 5, autour d'un axe de rotation X5, en particulier dans la configuration assemblée de l'installation de fermeture 1.

Ici, l'axe de rotation X5 de l'articulation entre la deuxième extrémité 32b du deuxième bras 32 et l'écran 5 est parallèle à l'axe de rotation Z de l'écran 5, ainsi qu'à l'axe de rotation X36 de l'arbre de sortie 36 et à l'axe de rotation X11 entre la deuxième extrémité 31b du premier bras 31 et la première extrémité 32a du deuxième bras 32.

Avantageusement, l'écran 5 est libre en rotation par rapport au deuxième bras 32, autour de l'axe de rotation X5.

L'arbre de sortie 36 entraîne donc en rotation, autrement dit est donc configuré pour entraîner en rotation, autour de l'axe de rotation X36, le premier bras 31, qui entraîne en rotation, autrement dit est configuré pour entraîner en rotation, autour de l'axe de rotation X11, le deuxième bras 32, qui entraîne en rotation, autrement dit est configuré pour entraîner en rotation, l'écran 5, d'une part, par rapport au deuxième bras 32, autour de l'axe de rotation X5, et, d'autre part, par rapport au pilier 6, autour de l'axe de rotation Z.

Ici, le premier bras 31 s'étend suivant une direction définie par un premier axe longitudinal X31. Le premier axe longitudinal X31 passe par l'axe de rotation X36 de l'arbre de sortie 36 et l'axe de rotation X11 de l'articulation entre la deuxième extrémité 31b du premier bras 31 et la première extrémité 32a du deuxième bras 32. Le deuxième bras 32 s'étend suivant une direction définie par un deuxième axe longitudinal X32. Le deuxième axe longitudinal X32 passe, d'une part, par l'axe de rotation X11 de l'articulation entre la deuxième extrémité 31b du premier bras 31 et la première extrémité 32a du deuxième bras 32 et, d'autre part, par l'axe de rotation X5 de l'articulation entre la deuxième extrémité 32b du deuxième bras 32 et l'écran 5.

Avantageusement, le premier axe longitudinal X31 est orienté par rapport au deuxième axe longitudinal X32, autour de l'axe de rotation X11 de l'articulation entre la deuxième extrémité 31b du premier bras 31 et la première extrémité 32a du deuxième bras 32, selon un angle α.

Avantageusement, lorsque l'écran 5 est dans sa position fermée, une valeur de l'angle α est strictement inférieure à 180° et, préférentiellement, est comprise dans une plage s'étendant entre 130° et 150°.

Avantageusement, en particulier dans le cas où le réducteur 21 est de type réversible, le premier bras 31 comprend une première butée, non représentée. Le deuxième bras 32 comprend une deuxième butée, non représentée. En outre, la première butée est configurée pour être en appui, autrement dit est en appui, contre la deuxième butée, lors d'un mouvement de l'écran 5 entre sa position ouverte et sa position fermée.

Avantageusement, une position de la première butée par rapport à une position de la deuxième butée, ou inversement, est réglable, de sorte à définir une valeur de l'angle α maximale, lorsque l'écran 5 est dans sa position fermée.

Avantageusement, l'actionneur électromécanique 4 comprend, en outre, un dispositif de déverrouillage 37.

Le dispositif de déverrouillage 37 est configuré pour débrayer, autrement dit débraye, l'arbre de sortie 36 par rapport au moteur électrique 10 et, éventuellement, au réducteur 21.

Ainsi, dans une position débrayée du dispositif de déverrouillage 37, l'écran 5 peut être déplacé manuellement, autour de l'axe de rotation Z, en particulier par rapport au pilier 6, notamment en cas de panne de l'actionneur électromécanique 4 ou de coupure de l'alimentation électrique de ce dernier.

Avantageusement, le dispositif de déverrouillage 37 est également configuré pour embrayer, autrement dit embraye, l'arbre de sortie 36 par rapport au moteur électrique 10 et, éventuellement, au réducteur 21.

Ainsi, dans une position embrayée du dispositif de déverrouillage 37, l'écran 5 peut être déplacé, autour de l'axe de rotation Z, en particulier par rapport au pilier 6, au moyen de l'actionneur électromécanique 4 en activant électriquement le moteur électrique 10.

Avantageusement, l'actionneur électromécanique 4 comprend, en outre, un dispositif de transmission 39.

Ici, le dispositif de transmission 39 comprend une pluralité de pignons 40, 41, 42, 43, en particulier un premier pignon 40, un deuxième pignon 41, un troisième pignon 42 et un quatrième pignon 43.

Ici, le premier pignon 40 est engrené, autrement dit est configuré pour être engrené, avec le deuxième pignon 41 et le troisième pignon 42 est engrené, autrement dit est configuré pour être engrené, avec le quatrième pignon 43, en particulier dans la configuration assemblée de l'actionneur électromécanique 4. Le deuxième pignon 41 est solidaire du troisième pignon 42. En outre, le quatrième pignon 43 est solidaire de l'arbre de sortie 36 de l'actionneur électromécanique 4.

Ici, un arbre, non représenté, du troisième pignon 42 est emmanché, autrement dit est configuré pour être emmanché, dans un alésage, non représenté, du deuxième pignon 41, en particulier dans la configuration assemblée de l'actionneur électromécanique 4.

En variante, non représentée, le deuxième pignon 41 est engrené, autrement dit est configuré pour être engrené, avec le troisième pignon 42, en particulier dans la configuration assemblée de l'actionneur électromécanique 4.

Ici, l'arbre de sortie 36 de l'actionneur électromécanique 4 est emmanché, autrement dit est configuré pour être emmanché, dans un alésage, non représenté, du quatrième pignon 43, en particulier dans la configuration assemblée de l'actionneur électromécanique 4.

Avantageusement, l'actionneur électromécanique 4 comprend, en outre, des paliers 44, 45, 46. En outre, les pignons 40, 41, 42, 43 du dispositif de transmission 39 sont guidés en rotation, autrement dit sont configurés pour être guidés en rotation, par les paliers 44, 45, 46, en particulier dans la configuration assemblée de l'actionneur électromécanique 4.

Avantageusement, les paliers 44, 45, 46 sont montés, autrement dit sont configurés pour être montés, dans la base 24, en particulier dans la configuration assemblée de l'actionneur électromécanique 4.

Ici et comme illustré à la figure 5, le premier pignon 40 est guidé en rotation par un premier palier 44. Les deuxième et troisième pignons 41, 42 sont guidés en rotation par un deuxième palier 45. En outre, le quatrième pignon 43 et l'arbre de sortie 36 de l'actionneur électromécanique 4 sont guidés en rotation par un troisième palier 46. Avantageusement, le dispositif de déverrouillage 37 comprend un embrayage 38. Ici, l'embrayage 38 est un embrayage mécanique à crabot.

Avantageusement, l'embrayage 38 est disposé entre le réducteur 21 et le dispositif de transmission 39.

Avantageusement, l'embrayage 38 comprend un arbre d'entrée, non représenté, et un arbre de sortie.

Ici, l'arbre d'entrée de l'embrayage 38 est accouplé, autrement dit est configuré pour être accouplé, avec l'arbre de sortie 47 du réducteur 21, en particulier dans la configuration assemblée de l'actionneur électromécanique 4. En outre, l'arbre de sortie de l'embrayage 38 est formé par le premier pignon 40 du dispositif de transmission 39. Avantageusement, le dispositif de déverrouillage 37 comprend, en outre, une palette 48. En outre, la palette 48 est configurée pour actionner, autrement dit actionne, l'embrayage 38, entre une position embrayée et une position débrayée, ou inversement.

Ainsi, la palette 48 permet d'actionner l'embrayage 38, de sorte à débrayer ou à embrayer le moteur électrique 10, en particulier l'arbre de sortie 47 du réducteur 21, par rapport à l'arbre de sortie 36 de l'actionneur électromécanique 4, en particulier par rapport au dispositif de transmission 39.

Par « embrayer », on entend la mise en œuvre d'un embrayage, au niveau de l'embrayage 38, pour coupler mécaniquement son arbre d'entrée et son arbre de sortie et transmettre un mouvement de rotation entre cet arbre d'entrée et cet arbre de sortie.

Par « débrayer », on entend la mise en œuvre d'un débrayage, au niveau de l'embrayage 38, pour découpler son arbre d'entrée et son arbre de sortie et ne pas transmettre de mouvement entre cet arbre d'entrée et cet arbre de sortie.

Avantageusement, lors de l'actionnement de l'embrayage 38 entre la position embrayée et la position débrayée par la palette 48, ou inversement, la palette 48 est déplacée suivant un mouvement prédéterminé par rapport à la base 24.

Dans un exemple de réalisation, le mouvement prédéterminé de la palette 48 par rapport à la base 24 est un mouvement de rotation.

En variante, non représentée, le mouvement prédéterminé de la palette 48 par rapport à la base 24 est un mouvement de translation.

Avantageusement, la palette 48 comprend une fourchette 49. L'embrayage 38 comprend une pluralité de fentes 50. En outre, la fourchette 49 de la palette 48 coopère, autrement dit est configurée pour coopérer, avec les fentes 50 de l'embrayage 38, en particulier dans la configuration assemblée de l'actionneur électromécanique 4.

Ainsi, lors du débrayage de l'arbre de sortie 36 par rapport au moteur électrique 10, la fourchette 49 de la palette 48 est déplacée à l'intérieur des fentes 50 de l'embrayage 38, dans un premier sens, de sorte à actionner l'embrayage 38, depuis la position embrayée vers la position débrayée.

En outre, lors de l'embrayage de l'arbre de sortie 36 par rapport au moteur électrique 10, la fourchette 49 de la palette 48 est déplacée, dans un deuxième sens opposé au premier sens, à l'intérieur des fentes 50 de l'embrayage 38, de sorte à actionner l'embrayage 38 depuis la position débrayée vers la position embrayée.

Avantageusement, l'actionneur électromécanique 4 comprend, en outre, un support 51.

Ici, le support 51 est fixé, autrement dit est configuré pour être fixé, sur la base 24, au moyen d'éléments de fixation 52, en particulier dans la configuration assemblée de l'actionneur électromécanique 4.

Ici, les éléments de fixation 52 du support 51 sur la base 24 sont des vis de fixation, en particulier au nombre de deux, dont une seule est visible aux figures 3 à 5. Chaque élément de fixation 52 traverse un trou de passage, non représenté, ménagé dans le support 51 et est vissé dans un trou de vissage, non représenté, ménagé dans la base 24.

Le nombre et le type des éléments de fixation du support sur la base ne sont pas limitatifs et peuvent être différents. Ces éléments de fixation peuvent être, par exemple, en nombre supérieur ou égal à trois. Ils peuvent être également, par exemple, des éléments de fixation par rivetage ou par encliquetage élastique.

En variante, non représentée, la base 24 et le support 51 ne forment qu'une seule pièce. Autrement dit, la base 24 et le support 51 constituent une pièce monobloc.

Ici, le dispositif de déverrouillage 37 comprend, en outre, une tige de déverrouillage 53. En outre, le mouvement prédéterminé de la palette 48 par rapport à la base 24 est mis en œuvre au moyen de la tige de déverrouillage 53.

Avantageusement, le dispositif de déverrouillage 37 est accessible, autrement dit est configuré pour être accessible, à partir de l'extérieur du carter 9, en particulier du capot 22.

Ici, le support 51 comprend un trou taraudé 54. La tige de déverrouillage 53 comprend une portion filetée, non représentée. En outre, la portion filetée de la tige de déverrouillage 53 coopère, autrement dit est configurée pour coopérer, avec le trou taraudé 54 du support 51, en particulier dans la configuration assemblée de l'actionneur électromécanique 4.

Ainsi, lors débrayage de l'arbre de sortie 36 par rapport au moteur électrique 10, la tige de déverrouillage 53 est entraînée en rotation, dans un premier sens, par rapport au support 51, autour d'un axe de rotation X53, en particulier par l'utilisateur, par exemple d'un demi-tour, de sorte à déplacer, en particulier à descendre, la palette 48 par rapport à la base 24 et, par conséquent, à actionner l'embrayage 38 depuis la position embrayée vers la position débrayée.

En outre, lors de l'embrayage de l'arbre de sortie 36 par rapport au moteur électrique 10, la tige de déverrouillage 53 est entraînée en rotation par rapport au support 51, dans un deuxième sens opposé au premier sens, autour de l'axe de rotation X53, en particulier par l'utilisateur, par exemple d'un demi-tour, de sorte à déplacer, en particulier à remonter, la palette 48 par rapport à la base 24 et, par conséquent, à actionner l'embrayage 38 depuis la position débrayée vers la position embrayée.

Avantageusement, la tige de déverrouillage 53 comprend une portion de préhension 55. Le carter 9, en particulier le capot 22, comprend une ouverture 56. En outre, la tige de déverrouillage 53 traverse, autrement dit est configurée pour traverser, le carter 9, notamment le capot 22, par l'ouverture 56, de sorte que la portion de préhension 55 est disposée à l'extérieur du carter 9, notamment du capot 22, en particulier dans la configuration assemblée de l'actionneur électromécanique 4.

En variante ou en complément, le dispositif de déverrouillage 37 comprend, en outre, un câble, non représenté. En outre, le mouvement prédéterminé de la palette 48 par rapport à la base 24 est mis en œuvre en tirant sur le câble. Avantageusement, le câble est relié à une serrure, non représentée, à clé. En outre, un effort de traction sur le câble, pour mettre en œuvre le mouvement prédéterminé de la palette 48 par rapport à la base 24, est exercé en tournant la clé dans la serrure, de sorte à actionner l'embrayage 38 depuis la position embrayée vers la position débrayée. Avantageusement, la serrure est disposée au niveau ou dans le pilier 6. Ainsi, l'accès à la serrure est facilité pour l'utilisateur.

En variante, non représentée, le dispositif de déverrouillage 37 est accessible, autrement dit est configuré pour être accessible, en démontant le capot 22 par rapport à la base 24.

Avantageusement, l'installation de fermeture 1 et, plus particulièrement, le dispositif d'entraînement motorisé 3 comprend, en outre, une unité de contrôle 12, en particulier une unité électronique de contrôle.

Ici et tel qu'illustré à la figure 1, l'unité de contrôle 12 est déportée par rapport à l'actionneur électromécanique 4, en particulier à l'extérieur du portail battant 2.

Avantageusement, l'unité de contrôle 12 est fixée, autrement dit est configurée pour être fixée, sur l'un des piliers 6, en particulier dans la configuration assemblée de l'installation de fermeture 1.

Avantageusement, l'unité de contrôle 12 est disposée, en partie ou intégralement, à l'intérieur d'un coffret, en particulier une armoire électrique.

En variante ou en complément, l'unité de contrôle 12 est disposée, en partie ou en intégralité, à l'intérieur de l'actionneur électromécanique 4 et, plus particulièrement, du carter 9.

L'unité de contrôle 12 comprend des moyens matériels et/ou logiciels. A titre d'exemple nullement limitatif, les moyens matériels peuvent comprendre au moins un microcontrôleur, non représenté.

L'unité de contrôle 12 est apte à mettre en fonctionnement le moteur électrique 10 et, en particulier, à permettre l'alimentation en énergie électrique du moteur électrique 10.

Ainsi, l'unité de contrôle 12 commande, notamment, le moteur électrique 10, de sorte à ouvrir ou fermer le ou chaque écran 5.

Avantageusement, l'unité de contrôle 12 et, plus particulièrement, l'actionneur électromécanique 4 est alimenté en énergie électrique au moyen d'au moins un câble d'alimentation électrique, non représenté.

Avantageusement, l'installation de fermeture 1 comprend, en outre, une interface de commande 13, 14. L'interface de commande 13, 14 est reliée fonctionnellement à l'unité de contrôle 12.

Avantageusement, l'interface de commande 13, 14 peut être une unité de commande locale 13 et/ou une unité de commande centrale 14.

Comme illustré à la figure 1, l'unité de commande locale 13 ou l'unité de commande centrale 14 est reliée, par une liaison non filaire, à l'unité de contrôle 12.

En variante, la liaison entre l'unité de commande locale 13 ou l'unité de commande centrale 14 et l'unité de contrôle 12 est filaire.

L'unité de commande locale 13 peut être reliée, en liaison filaire ou non filaire, avec l'unité de commande centrale 14.

L'unité de contrôle 12 peut être commandée à partir de l'unité de commande locale 13 ou de l'unité de commande centrale 14.

Avantageusement, l'unité de contrôle 12 comprend un premier module de communication 15, comme illustré à la figure 1, en particulier de réception d'ordres de commande, les ordres de commande étant émis par un émetteur d'ordres, tel que l'unité de commande locale 13 ou l'unité de commande centrale 14, ces ordres étant destinés à commander le dispositif d'entraînement motorisé 3.

Avantageusement, le premier module de communication 15 est de type sans fil. En particulier, le premier module de communication 15 est configuré pour recevoir des ordres de commande radioélectriques.

Avantageusement, le premier module de communication 15 peut également permettre la réception d'ordres de commande transmis par des moyens filaires.

L'unité de commande locale 13 ou l'unité de commande centrale 14 comprend un clavier de commande. Le clavier de commande de l'unité de commande locale 13 ou de l'unité de commande centrale 14 comprend un ou plusieurs éléments de sélection 16 et, éventuellement, un ou plusieurs éléments d'affichage 17.

A titre d'exemples nullement limitatifs, les éléments de sélection comprennent des boutons poussoirs ou des touches sensitives. Les éléments d'affichage comprennent des diodes électroluminescentes et/ou un afficheur, par exemple LCD (acronyme du terme anglo-saxon « Liquid Crystal Display ») ou TFT (acronyme du terme anglo-saxon « Thin Film Transistor »). Les éléments de sélection et d'affichage peuvent être également réalisés au moyen d'un écran tactile.

L'unité de commande locale 13 ou l'unité de commande centrale 14 permet à un utilisateur de régler des paramètres et/ou de commander le dispositif d'entraînement motorisé 3 et, en particulier, l'actionneur électromécanique 4, par un appui sur l'un des éléments de sélection 16.

Avantageusement, l'unité de contrôle 12, l'unité de commande locale 13 ou l'unité de commande centrale 14 peut être en communication avec une station météorologique, non représentée, située sur ou à proximité d'un terrain délimité par la clôture 8 et incluant, notamment, un ou plusieurs capteurs pouvant être configurés pour déterminer, par exemple, une température, une vitesse de vent ou encore une luminosité. Lorsque l'ouverture 7 est ménagée dans un bâtiment, cette station météorologique est déportée à l'extérieur de ce bâtiment.

Avantageusement, l'unité de contrôle 12, l'unité de commande locale 13 et/ou l'unité de commande centrale 14 peuvent également être en communication avec un serveur 18, de sorte à contrôler le dispositif d'entraînement motorisé 3 suivant des données mises à disposition à distance par l'intermédiaire d'un réseau de communication, en particulier un réseau internet pouvant être relié au serveur 18.

Avantageusement, l'unité de commande locale 13 ou l'unité de commande centrale 14 comprend au moins un deuxième module de communication 19.

Ainsi, le deuxième module de communication 19 de l'unité de commande locale 13 ou de l'unité de commande centrale 14 est configuré pour émettre, autrement dit émet, des ordres de commande, en particulier par des moyens sans fil, par exemple radioélectriques, ou par des moyens filaires.

En outre, le deuxième module de communication 19 peut également être configuré pour recevoir, autrement dit reçoit, des ordres de commande, en particulier par l'intermédiaire des mêmes moyens.

Le deuxième module de communication 19 de l'unité de commande locale 13 ou de l'unité de commande centrale 14 est configuré pour communiquer, autrement dit communique, avec le premier module de communication 15 de l'unité de contrôle 12.

Ainsi, le deuxième module de communication 19 de l'unité de commande locale 13 ou de l'unité de commande centrale 14 échange des ordres de commande avec le premier module de communication 15 de l'unité de contrôle 12, soit de manière monodirectionnelle, soit de manière bidirectionnelle.

Avantageusement, l'unité de commande locale 13 est un point de commande, pouvant être nomade ou fixe. Un point de commande nomade peut être une télécommande, un téléphone intelligent ou une tablette. Un point de commande fixe peut être un boîtier de commande destiné à être fixé sur une façade d'un mur d'un bâtiment ou de l'un des piliers 6.

Avantageusement, l'unité de commande locale 13 ou l'unité de commande centrale 14 comprend, en outre, un contrôleur 20.

Le dispositif d'entraînement motorisé 3, en particulier l'unité de contrôle 12, est configuré pour exécuter des ordres de commande de déplacement, notamment de fermeture ainsi que d'ouverture, du ou de chaque écran 5. Ces ordres de commande peuvent être émis, notamment, par l'unité de commande locale 13 ou par l'unité de commande centrale 14.

Le dispositif d'entraînement motorisé 3 peut être contrôlé par l'utilisateur, par exemple par la réception d'un ordre de commande correspondant à un appui sur le ou l'un des éléments de sélection 16 de l'unité de commande locale 13 ou de l'unité de commande centrale 14.

Avantageusement, l'installation de fermeture 1 comprend, en outre, au moins un capteur, non représenté.

En variante ou en complément, le capteur peut être intégré à la station météorologique.

Avantageusement, le capteur comprend au moins un deuxième module de communication 19, tel que celui décrit en référence à l'unité de commande locale 13 ou à l'unité de commande centrale 14. En outre, le deuxième module de communication 19 du capteur est configuré pour communiquer, autrement dit communique, avec le premier module de communication 15 de l'unité de contrôle 12.

Avantageusement, le capteur peut être, par exemple, un capteur d'éclairement, un capteur de température, un capteur d'humidité ou un capteur de vent.

Ainsi, le dispositif d'entraînement motorisé 3 peut également être contrôlé automatiquement par la réception d'un ordre de commande correspondant à au moins un signal provenant du capteur.

En variante ou en complément, le dispositif d'entraînement motorisé 3 peut également être contrôlé automatiquement par la réception d'un ordre de commande correspondant à au moins un signal provenant d'une horloge, non représentée, de l'unité de contrôle 12, en particulier du microcontrôleur.

En variante ou en complément, le capteur et/ou l'horloge peuvent être intégrés à l'unité de commande locale 13 ou à l'unité de commande centrale 14.

L'actionneur électromécanique 4 comprend, en outre, un dispositif de détection de position 58. Le dispositif de détection de position 58 est configuré pour détecter, autrement dit détecte, au moins une première position de fin de course de l'arbre de sortie 36.

Avantageusement, le dispositif de détection de position 58 est configuré pour détecter, autrement dit détecte, une deuxième position de fin de course de l'arbre de sortie 36.

Avantageusement, la détection de la première position de fin de course de l'arbre de sortie 36 et, éventuellement, de la deuxième position de fin de course de l'arbre de sortie 36 sont mises en œuvre au moyen de l'unité de contrôle 12, en particulier de son microcontrôleur, par l'intermédiaire du dispositif de détection de position 58.

Ici, la première position de fin de course de l'arbre de sortie 36 correspond à une position précédant la position souhaitée fermée de l'écran 5 et la deuxième position de fin de course de l'arbre de sortie 36 correspond à une position précédant la position souhaitée ouverte de l'écran 5, ou inversement.

Avantageusement, suite à la détection de la première position de fin de course de l'arbre de sortie 36, respectivement de la deuxième position de fin de course de l'arbre de sortie 36, l'unité de contrôle 12 est configurée pour commander, autrement dit commande, la continuité de l'activation électrique du moteur électrique 10, de sorte que l'écran 5 se déplace en rotation, autour de l'axe de rotation Z, d'une distance prédéterminée au niveau de son extrémité finale, puis l'arrêt du moteur électrique 10, de sorte à maintenir en position l'écran 5 dans la position souhaitée, en particulier la position fermée, respectivement la position ouverte.

La distance prédéterminée est, préférentiellement, de l'ordre de cinq (5) centimètres.

Pendant la continuité de l'activation électrique du moteur électrique 10, au cours de la distance prédéterminée, le moteur électrique 10 peut être alimenté en énergie électrique avec une puissance maximale pour atteindre la position souhaitée, en particulier la position fermée, respectivement la position ouverte, tout en garantissant la conformité sécuritaire de l'installation de fermeture 1, même si un point dur est rencontré pendant le déplacement de l'écran 5.

En variante, non représentée, la première position de fin de course de l'arbre de sortie 36 correspond à la position souhaitée fermée de l'écran 5 et la deuxième position de fin de course de l'arbre de sortie 36 correspond à la position souhaitée ouverte de l'écran 5, ou inversement. Dans ce cas, suite à la détection de la première position de fin de course de l'arbre de sortie 36, respectivement de la deuxième position de fin de course de l'arbre de sortie 36, l'unité de contrôle 12 est configurée pour commander, autrement dit commande, l'arrêt du moteur électrique 10, de sorte à maintenir en position l'écran 5 dans la position souhaitée, en particulier la position fermée, respectivement la position ouverte.

On décrit à présent, plus en détail et en référence aux figures 3 à 5, le dispositif de détection de position 58 appartenant à l'actionneur électromécanique 4.

Le dispositif de détection de position 58 comprend un élément mobile 59, dans l'exemple de réalisation un élément rotatif. L'élément mobile 59 est solidaire de l'arbre de sortie 36.

Dans l'exemple de réalisation, l'élément mobile 59 est mobile en rotation, autour de l'axe de rotation X36.

Ici, l'axe de rotation de l'élément mobile 59 est confondu avec l'axe de rotation X36 de l'arbre de sortie 36.

Avantageusement, l'élément mobile 59 est un bras rotatif.

Le dispositif de détection de position 58 comprend, en outre, une rainure de positionnement 60.

Dans l'exemple de réalisation, la rainure de positionnement 60 est en forme d'au moins un arc de cercle.

Ici, la rainure de positionnement 60 est une portion de couronne.

En variante, non représentée, la rainure de positionnement 60 est une couronne, c'est-à-dire en forme de cercle complet.

Ici, la rainure de positionnement 60 est centrée sur l'axe de rotation X36.

La rainure de positionnement 60 est ménagée dans la base 24.

Le dispositif de détection de position 58 comprend, en outre, un premier élément de détection de position 61a. Le premier élément de détection de position 61a est fixé sur l'élément mobile 59, au moyen d'au moins un élément de fixation 62.

Le dispositif de détection de position 58 comprend, en outre, un premier capteur de détection de position 63a. Le premier capteur de détection de position 63a est configuré pour détecter, autrement dit détecte, une position, dans l'exemple de réalisation angulaire, du premier élément de détection de position 61a, en particulier autour de l'axe de rotation X36.

Ainsi, le premier capteur de détection de position 63a est configuré pour détecter, autrement dit détecte, l'atteinte d'une position du premier élément de détection de position 61a par rapport au premier capteur de détection de position 63a.

Le dispositif de détection de position 58 comprend, en outre, un premier plot de positionnement 64a. Le premier plot de positionnement 64a est maintenu en position, autrement dit est configuré pour être maintenu en position, par rapport à la rainure de positionnement 60 dans une première position, en particulier dans la configuration assemblée de l'actionneur électromécanique 4.

Le premier capteur de détection de position 63a est fixé, autrement dit est configuré pour être fixé, sur le premier plot de positionnement 64a, en particulier dans la configuration assemblée de l'actionneur électromécanique 4.

En outre, le premier plot de positionnement 64a comprend au moins une première butée 69a d'arrêt de l'élément mobile 59. Cette première butée 69a est visible aux figures 3 et 4.

Avantageusement, le dispositif de détection de position 58 comprend, en outre, un deuxième élément de détection de position 61b, un deuxième capteur de détection de position 63b et un deuxième plot de positionnement 64b.

Le deuxième élément de détection de position 61b est fixé, autrement dit est configuré pour être fixé, sur l'élément mobile 59 au moyen d'au moins un autre élément de fixation 62, en particulier dans la configuration assemblée de l'actionneur électromécanique 4.

Le deuxième capteur de détection de position 63b est configuré pour détecter, autrement dit détecte, une position, dans l'exemple de réalisation angulaire, du deuxième élément de détection de position 61b, en particulier autour de l'axe de rotation X36.

Ainsi, le deuxième capteur de détection de position 63b est configuré pour détecter, autrement dit détecte, l'atteinte d'une position du deuxième élément de détection de position 61b par rapport au deuxième capteur de détection de position 63b.

Le deuxième plot de positionnement 64b est maintenu en position, autrement dit est configuré pour être maintenu en position, par rapport à la rainure de positionnement 60 dans une deuxième position, en particulier dans la configuration assemblée de l'actionneur électromécanique 4. La deuxième position est différente de la première position.

Le deuxième capteur de détection de position 63b est fixé, autrement dit est configuré pour être fixé, sur le deuxième plot de positionnement 64b, en particulier dans la configuration assemblée de l'actionneur électromécanique 4. En outre, le deuxième plot de positionnement 64b comprend au moins une deuxième butée 69b d'arrêt de l'élément mobile 59. Cette deuxième butée 69b est visible aux figures 3 et 5.

Avantageusement, le deuxième élément de détection de position 61b, le deuxième capteur de détection de position 63b et le deuxième plot de positionnement 64b sont respectivement semblables au premier élément de détection de position 61a, au premier capteur de détection de position 63a et au premier plot de positionnement 64a.

Ainsi, ce qui est décrit ci-après pour le premier élément de détection de position 61a, le premier capteur de détection de position 63a et le premier plot de positionnement 64a s'applique également pour le deuxième élément de détection de position 61b, le deuxième capteur de détection de position 63b et le deuxième plot de positionnement 64b.

Cette construction de l'actionneur électromécanique 4 permet ainsi de simplifier la mise en service de l'actionneur électromécanique 4 et, par conséquent, de l'installation de fermeture 1 en réduisant le nombre d'étapes de réglage de la première position de fin de course de l'arbre de sortie 36 et de la première butée 69a et, éventuellement, de la deuxième première position de fin de course de l'arbre de sortie 36 et de la deuxième butée 69b.

En outre, cette construction de l'actionneur électromécanique 4 permet que le premier capteur de détection de position 63a et la première butée 69a soient intégrés au plus près l'un de l'autre et, en l'occurrence, au niveau du premier plot de positionnement 64a, qui est destiné à être inséré dans la rainure de positionnement 60 de la base 24.

De cette manière, le premier plot de positionnement 64a, d'une part, supporte le premier capteur de détection de position 63a et, d'autre part, comporte la première butée 69a, de sorte à pouvoir régler dans un même temps la position du premier capteur de détection de position 63a et la position de la première butée 69a par rapport à la rainure de positionnement 60, dans l'exemple de réalisation autour de l'axe de rotation X36.

Par ailleurs, cette construction de l'actionneur électromécanique 4 permet, éventuellement, que le deuxième capteur de détection de position 63b et la deuxième butée 69b soient intégrés au plus près l'un de l'autre et, en l'occurrence, au niveau, du deuxième plot de positionnement 64b, qui est destiné à être inséré dans la rainure de positionnement 60 de la base 24.

De cette manière, le deuxième plot de positionnement 64b, d'une part, supporte le deuxième capteur de détection de position 63b et, d'autre part, comporte la deuxième butée 69b, de sorte à pouvoir régler dans un même temps la position du deuxième capteur de détection de position 63b et la position de la deuxième butée 69b par rapport à la rainure de positionnement 60, dans l'exemple de réalisation autour de l'axe de rotation X36.

Ici, le premier plot de positionnement 64a, le premier capteur de détection de position 63a et le premier élément de détection de position 61a sont dédiés à la détection de la première position de fin de course de l'arbre de sortie 36. En outre, le deuxième plot de positionnement 64b, le deuxième capteur de détection de position 63b et le deuxième élément de détection de position 61b sont dédiés à la détection de la deuxième position de fin de course de l'arbre de sortie 36.

Ici, la première butée 69a du premier plot de positionnement 64a sert de butée mécanique de l'élément mobile 59, notamment en cas de défaillance du premier capteur de détection de position 63a. En outre, la deuxième butée 69b du deuxième plot de positionnement 64b sert de butée mécanique de l'élément mobile 59, notamment en cas de défaillance du deuxième capteur de détection de position 63b.

Avantageusement, le premier élément de détection de position 61a, respectivement le deuxième élément de détection de position 61b, est un doigt.

Avantageusement, le premier plot de positionnement 64a, respectivement le deuxième plot de positionnement 64b, comprend deux pions 74. Le premier capteur de détection de position 63a, respectivement le deuxième capteur de détection de position 63b, comprend deux trous 75. En outre, chaque pion 74 du premier plot de positionnement 64a, respectivement du deuxième plot de positionnement 64b, est inséré, autrement dit est configuré pour être inséré, dans l'un des trous 75 du premier capteur de détection de position 63a, respectivement du deuxième capteur de détection de position 63b, en particulier dans la configuration assemblée de l'actionneur électromécanique 4.

Avantageusement, le premier capteur de détection de position 63a, respectivement le deuxième capteur de détection de position 63b, est fixé, autrement dit est configuré pour être fixé, sur le premier plot de positionnement 64a, respectivement sur le deuxième plot de positionnement 64b, au moyen d'au moins un élément de fixation 76 par encliquetage élastique, en l'occurrence au nombre de un, en particulier dans la configuration assemblée de l'actionneur électromécanique 4.

Le nombre et le type d'éléments de fixation du premier capteur de détection de position, respectivement du deuxième capteur de détection de position, sur le premier plot de positionnement, respectivement sur le deuxième plot de positionnement, ne sont pas limitatifs et peuvent être différents. Ces éléments de fixation peuvent être, par exemple, en nombre supérieur ou égal à deux. Ils peuvent également être, par exemple, des éléments de fixation par vissage ou par rivetage.

La rainure de positionnement 60 comprend au moins une première denture interne 65. Le premier plot de positionnement 64a, respectivement le deuxième plot de positionnement 64b, comprend au moins une première portion de denture 66. En outre, la première portion de denture 66 du premier plot de positionnement 64a, respectivement du deuxième plot de positionnement 64b, est engagée, autrement dit est configurée pour être engagée ou emboîtée, dans la première denture interne 65, en particulier dans la configuration assemblée de l'actionneur électromécanique 4.

Ici, la première denture interne 65 et la première portion de denture 66 sont de forme circulaire.

La rainure de positionnement 60 comprend, en outre, une première surface 60a et une deuxième surface 60b. La deuxième surface 60b est opposée à la première surface 60a. La première denture interne 65 est ménagée sur la première surface 60a.

La rainure de positionnement 60 comprend, en outre, une deuxième denture interne 67. La deuxième denture interne 67 est ménagée sur la deuxième surface 60b.

Ainsi, la deuxième denture interne 67 est opposée, c'est-à-dire fait face, à la première denture interne 65.

Le premier plot de positionnement 64a, respectivement le deuxième plot de positionnement 64b, comprend, en outre, une deuxième portion de denture 68. La deuxième portion de denture 68 du premier plot de positionnement 64a, respectivement du deuxième plot de positionnement 64b, est opposée à la première portion de denture 66. En outre, la deuxième portion de denture 68 du premier plot de positionnement 64a, respectivement du deuxième plot de positionnement 64b, est engagée, autrement dit est configurée pour être engagée ou emboîtée, dans la deuxième denture interne 67, en particulier dans la configuration assemblée de l'actionneur électromécanique 4.

Ainsi, l'engagement de la première portion de denture 66 dans la première denture interne 65 et de la deuxième portion de denture 68 dans la deuxième denture interne 67 permet de garantir un positionnement stable et robuste du premier plot de positionnement 64a, respectivement du deuxième plot de positionnement 64b, par rapport à la rainure de positionnement 60, tout en permettant de régler facilement la position du premier plot de positionnement 64a, respectivement du deuxième plot de positionnement 64b, par rapport à la rainure de positionnement 60, selon un pas défini par les première et deuxième portions de denture 66, 68 et les première et deuxième dentures internes 65, 67.

Ici, la deuxième denture interne 67 et la deuxième portion de denture 68 sont de forme circulaire.

Avantageusement, le premier élément de détection de position 61a, respectivement le deuxième élément de détection de position 61b, comprend au moins un trou de passage 70. L'élément mobile 59 comprend au moins un trou de fixation 71, en l'occurrence deux trous de fixation 71. En outre, l'élément de fixation 62 traverse le trou de passage 70 du premier élément de détection de position 61a et est fixé dans l'un des trous de fixation 71 de l'élément mobile 59 et, éventuellement, l'autre élément de fixation 72 traverse le trou de passage 70 du deuxième élément de détection de position 61b et est fixé dans l'autre des trous de fixation 71 de l'élément mobile 59.

Ici, le ou chaque élément de fixation 62 est une vis de fixation.

En variante, non représentée, le ou chaque élément de fixation 62 est un élément de fixation par encliquetage élastique.

Avantageusement, le ou chaque trou de passage 70 est de forme oblongue, autrement dit est une lumière allongée. Le trou de passage 70 du premier élément de détection de position 61a permet d'ajuster le positionnement du premier élément de détection de position 61a par rapport à l'élément mobile 59, lors de la fixation de l'élément de fixation 62 dans l'un des trous de fixation 71. En outre, éventuellement, le trou de passage 70 du deuxième élément de détection de position 61b permet d'ajuster le positionnement du deuxième élément de détection de position 61b par rapport à l'élément mobile 59, lors de la fixation de l'autre élément de fixation 62 dans l'autre des trous de fixation 71.

Ainsi, le réglage du premier élément de détection de position 61a, respectivement du deuxième élément de détection de position 61b, par rapport à l'élément mobile 59, au moyen du trou de passage 70 de forme oblongue du premier élément de détection de position 61a, respectivement du deuxième élément de détection de position 61b, permet d'ajuster de manière précise la position du premier élément de détection de position 61a, respectivement du deuxième élément de détection de position 61b, par rapport au premier capteur de détection de position 63a, respectivement au deuxième capteur de détection de position 63b.

De cette manière, la première position de fin de course de l'arbre de sortie 36 et, plus particulièrement, du deuxième bras 32 du système de transmission de mouvement 11 est ajustée au plus près de la position, en particulier de la position fermée, souhaitée de l'écran 5. En outre, éventuellement, la deuxième position de fin de course de l'arbre de sortie 36 et, plus particulièrement, du deuxième bras 32 du système de transmission de mouvement **11** est ajustée au plus près de la position, en particulier de la position ouverte, souhaitée de l'écran 5.

Par conséquent, le positionnement du premier plot de positionnement 64a par rapport à la rainure de positionnement 60 dans la première position permet un premier réglage de la première position de fin de course de l'arbre de sortie 36 et le positionnement du premier élément de détection de position 61a par rapport à l'élément mobile 59 permet un deuxième réglage de la première position de fin de course de l'arbre de sortie 36. Le deuxième réglage est plus fin que le premier réglage, de sorte à pouvoir ajuster la première position de fin de course de l'arbre de sortie 36 par rapport à la position, en particulier à la position fermée, souhaitée de l'écran 5. En outre, éventuellement, le positionnement du deuxième plot de positionnement 64b par rapport à la rainure de positionnement 60 dans la deuxième position permet un premier réglage de la deuxième position de fin de course de l'arbre de sortie 36 et le positionnement du deuxième élément de détection de position 61b par rapport à l'élément mobile 59 permet un deuxième réglage de la deuxième position de fin de course de l'arbre de sortie 36. Le deuxième réglage est plus fin que le premier réglage, de sorte à pouvoir ajuster la deuxième position de fin de course de l'arbre de sortie 36 par rapport à la position, en particulier à la position ouverte, souhaitée de l'écran 5.

Dans un exemple de réalisation, le premier plot de positionnement 64a, respectivement le deuxième plot de positionnement 64b, est réalisé en une première partie et une deuxième partie. La deuxième partie est fixée, autrement dit est configurée pour être fixée, à la première partie, en particulier dans la configuration assemblée de l'actionneur électromécanique 4.

Avantageusement, la première partie comprend un alésage, non représenté. La deuxième partie comprend un pion, non représenté. En outre, la fixation de la deuxième partie avec la première partie est mise en œuvre par emmanchement en force du pion dans l'alésage.

Avantageusement, la première partie comprend la première portion de denture 66 et, éventuellement, la deuxième portion de denture 68. En outre, la deuxième partie comprend la première butée 69a, respectivement la deuxième butée 69b, les pions 74 et l'élément de fixation 76.

En variante, non représentée, les première et deuxième parties du premier plot de positionnement 64a, respectivement du deuxième plot de positionnement 64b, ne forment qu'une seule pièce. Autrement dit, le premier plot de positionnement 64a, respectivement le deuxième plot de positionnement 64b, est une pièce monobloc.

Avantageusement, le premier capteur de détection de position 63a, respectivement le deuxième capteur de détection de position 63b, est un interrupteur mécanique. Le premier capteur de détection de position 63a, respectivement le deuxième capteur de détection de position 63b, comprend au moins une lame métallique déformable 72. Le premier élément de détection de position 61a est configuré pour être mis en appui, autrement dit est mis en appui, contre la lame métallique déformable 72 du premier capteur de détection de position 63a, lors de l'entraînement en mouvement, dans l'exemple de réalisation en rotation, de l'élément mobile 59, en particulier lors de l'atteinte de la première position de fin de course de l'arbre de sortie 36. En outre, éventuellement, le deuxième élément de détection de position 61b est configuré pour être mis en appui, autrement dit est mis en appui, contre la lame métallique déformable 72 du deuxième capteur de détection de position 63b, lors de l'entraînement en mouvement, dans l'exemple de réalisation en rotation, de l'élément mobile 59, en particulier lors de l'atteinte de la deuxième position de fin de course de l'arbre de sortie 36.

En variante, non représentée, le premier élément de détection de position 61a, respectivement le deuxième élément de détection de position 61b, comprend au moins un aimant, en particulier permanent, non représenté. Le premier capteur de détection de position 63a, respectivement le deuxième capteur de détection de position 63b, est un capteur à effet Hall. Le dispositif de détection de position 58 est configuré pour détecter, autrement dit détecte, le positionnement du premier élément de détection de position 61a en vis-à-vis du premier capteur de détection de position 63a, lors de l'entraînement en mouvement, dans l'exemple de réalisation en rotation, de l'élément mobile 59, en particulier lors de l'atteinte de la première position de fin de course de l'arbre de sortie 36. En outre, éventuellement, le dispositif de détection de position 58 est configuré pour détecter, autrement dit détecte, le positionnement du deuxième élément de détection de position 61b en vis-à-vis du deuxième capteur de détection de position 63b, lors de l'entraînement en mouvement, dans l'exemple de réalisation en rotation, de l'élément mobile 59, en particulier lors de l'atteinte de la deuxième position de fin de course de l'arbre de sortie 36. Avantageusement, le premier élément de détection de position 61a, respectivement le deuxième élément de détection de position 61b, comprend, en outre, au moins un logement. En outre, le logement reçoit, autrement dit est configuré pour recevoir, l'aimant, en particulier dans la configuration assemblée de l'actionneur électromécanique 4.

Avantageusement, le premier capteur de détection de position 63a, respectivement le deuxième capteur de détection de position 63b, comprend au moins une source lumineuse, non représentée. La source lumineuse est configurée pour signaler, autrement dit signale, le positionnement du premier élément de détection de position 61a, respectivement du deuxième élément de détection de position 61b, en vis-à-vis du premier capteur de détection de position 63a, respectivement du deuxième capteur de détection de position 63b, en particulier lors de l'atteinte de la première position de fin de course de l'arbre de sortie 36, respectivement de la deuxième position de fin de course de l'arbre de sortie 36.

Ainsi, la source lumineuse permet de fournir une indication de positionnement du premier élément de détection de position 61a, respectivement du deuxième élément de détection de position 61b, par rapport au premier capteur de détection de position 63a, respectivement au deuxième capteur de détection de position 63b, en particulier lors du réglage de la première position de fin de course de l'arbre de sortie 36, respectivement de la deuxième position de fin de course de l'arbre de sortie 36.

Le nombre de sources lumineuses du premier capteur de détection de position, respectivement du deuxième capteur de détection de position, n'est pas limitatif. Il peut être, par exemple, égal à un ou supérieur ou égal à deux.

Avantageusement, l'actionneur électromécanique 4 comprend, en outre, un bornier de raccordement électrique 73. Le premier capteur de détection de position 63a, respectivement le deuxième capteur de détection de position 63b, est raccordé électriquement, autrement dit est configuré pour être raccordé électriquement, au bornier de raccordement électrique 73, notamment au moyen de fils électriques, non représentés, en particulier dans la configuration assemblée de l'actionneur électromécanique 4. En outre, le bornier de raccordement électrique 73 est raccordé électriquement, autrement dit est configuré pour être raccordé électriquement, à l'unité de contrôle 12, en particulier dans la configuration assemblée de l'installation de fermeture 1.

Lors de la mise en service de l'installation de fermeture 1, le dispositif de déverrouillage 37 du ou de chaque actionneur électromécanique 4 est placé dans la position débrayée, puis l'écran 5 concerné est déplacé en rotation, autour de son axe de rotation Z, en particulier manuellement.

Ensuite, le premier plot de positionnement 64a, respectivement le deuxième plot de positionnement 64b, est positionné à l'intérieur de la rainure de positionnement 60 dans la première position, respectivement dans la deuxième position, souhaitée et correspondant à la première position de fin de course de l'arbre de sortie 36, respectivement à la deuxième position de fin de course de l'arbre de sortie 36.

Après vérification de la position de la première butée 69a, respectivement de la deuxième butée 69b, par un déplacement manuel de l'écran 5 concerné, le dispositif de déverrouillage 37 de l'actionneur électromécanique 4 est placé dans la position embrayée puis un cycle d'autoapprentissage et de mémorisation de la première position de fin de course de l'arbre de sortie 36, respectivement de la deuxième position de fin de course de l'arbre de sortie 36, est mis en œuvre par l'unité de contrôle 12 en activant électriquement le moteur électrique 10.

Aucune action supplémentaire n'est nécessaire pour effectuer le réglage de la première butée 69a, respectivement de la deuxième butée 69b, étant donné que le premier capteur de détection de position 63a, respectivement le deuxième capteur de détection de position 64b, est solidaire du premier plot de positionnement 64a, respectivement du deuxième plot de positionnement 64b, et que la première butée 69a, respectivement la deuxième butée 69b, est intégrée au premier plot de positionnement 64a, respectivement au deuxième plot de positionnement 64b.

Dans le cas où un ajustement de la première position de fin de course de l'arbre de sortie 36, respectivement de la deuxième position de fin de course de l'arbre de sortie 36, est nécessaire, un réglage est possible en déplaçant le premier élément de détection 61a, respectivement le deuxième élément de détection 61b, par rapport à l'élément mobile 59 au moyen de l'élément de fixation 62 et du trou de passage 70 concernés.

Grâce à la présente invention, la construction de l'actionneur électromécanique permet de simplifier la mise en service de l'actionneur électromécanique et, par conséquent, de l'installation de fermeture en réduisant le nombre d'étapes de réglage d'au moins la première position de fin de course de l'arbre de sortie et la première butée et, éventuellement, d'au moins la deuxième position de fin de course de l'arbre de sortie et la deuxième butée.

De nombreuses modifications peuvent être apportées aux exemples de réalisation décrits précédemment, sans sortir du cadre de l'invention défini par les revendications.

En variante, non représentée, l'actionneur électromécanique 4 est un vérin, pouvant être télescopique ou non. Avantageusement, le système de transmission de mouvement **11** comprend une tige filetée et un écrou. La tige filetée est entraînée en rotation, autrement dit est configurée pour être entraînée en rotation, par le moteur électrique 10 et, avantageusement, par le réducteur 21. En outre, l'écrou est déplacé en translation, autrement dit est configuré pour être entraîné en translation, sur la tige filetée. Dans ce cas, l'élément mobile 59 est mobile en translation, selon un axe longitudinal de l'actionneur électromécanique 4, en particulier du carter 9, notamment en étant formé par l'écrou ou en étant fixé sur l'écrou. Autrement dit, l'élément mobile 59 est un chariot. En outre, le carter 9 et la base 24 peuvent être réalisés par la ou les mêmes pièces. Avantageusement, l'écrou comprend un premier élément communément appelé « porte-noix ». En outre, l'écrou comprend un deuxième élément communément appelé « noix ». Avantageusement, le carter 9 comprend une première partie et une deuxième partie. La première partie du carter 9 forme un premier logement à l'intérieur duquel est disposé le moteur électrique 10 et, éventuellement, le réducteur 21. En outre, la deuxième partie du carter 9 forme un deuxième logement à l'intérieur duquel est disposé le système de transmission de mouvement 11. En outre, les première et deuxième parties du carter 9 sont assemblées entre elles. Dans un exemple de réalisation, le premier logement de la première partie du carter 9 peut être disjoint du deuxième logement de la deuxième partie du carter 9. Dans ce cas, le moteur électrique 10 et, éventuellement, le réducteur 21 sont fixés dans la première partie du carter 9. En outre, la tige filetée du système de transmission de mouvement **11** est stationnaire, selon la direction de l'axe longitudinal, dans le carter 9 et, en particulier, dans la deuxième partie du carter 9. Ainsi, la tige filetée est protégée à l'intérieur de la deuxième partie du carter 9. De cette manière, seul l'écrou est configuré pour être déplacé, autrement dit est déplacé, le long de la tige filetée. En outre, l'écrou est configuré pour être déplacé, autrement dit est déplacé, à l'intérieur de la deuxième partie du carter 9. L'écrou est configuré pour être déplacé, autrement dit est déplacé, sur la tige filetée en fonction du sens d'entraînement en rotation du moteur électrique 10. La rainure de positionnement 60 est rectiligne. Le premier plot de positionnement 64a, d'une part, supporte le premier capteur de détection de position 63a et, d'autre part, comporte la première butée 69a, de sorte à pouvoir régler dans un même temps la position du premier capteur de détection de position 63a et la position de la première butée 69a par rapport à la rainure de positionnement 60, selon la direction de l'axe longitudinal de l'actionneur électromécanique 4, en particulier du carter 9. Avantageusement, le deuxième plot de positionnement 64b, d'une part, supporte le deuxième capteur de détection de position 63b et, d'autre part, comporte la deuxième butée 69b, de sorte à pouvoir régler dans un même temps la position du deuxième capteur de détection de position 63b et la position de la deuxième butée 69b par rapport à la rainure de positionnement 60, selon la direction de l'axe longitudinal de l'actionneur électromécanique 4, en particulier du carter 9. Dans ce cas, la première denture interne 65 et la première portion de denture 66, respectivement la deuxième denture interne 67 et la deuxième portion de denture 68, sont rectilignes.

En outre, les modes de réalisation et variantes mentionnés ci-dessus peuvent être combinés pour générer d'autres modes de réalisation de l'invention, sans sortir du cadre de l'invention défini par les revendications.

## Revendications

1. Actionneur électromécanique (4) pour une installation de fermeture (1),
l'actionneur électromécanique (4) comprenant au moins :
- une base (24),
- un moteur électrique (10),
- un arbre de sortie (36), l'arbre de sortie (36) étant entraîné en mouvement par le moteur électrique (10), et
- un dispositif de détection de position (58), le dispositif de détection de position (58) étant configuré pour détecter au moins une première position de fin de course de l'arbre de sortie (36),
le dispositif de détection de position (58) comprenant au moins :
- un élément mobile (59), l'élément mobile (59) étant solidaire de l'arbre de sortie (36),
- une rainure de positionnement (60), la rainure de positionnement (60) étant ménagée dans la base (24),
- un premier élément de détection de position (61a), le premier élément de détection de position (61a) étant fixé sur l'élément mobile (59), au moyen d'au moins un élément de fixation (62),
- un premier capteur de détection de position (63a), le premier capteur de détection de position (63a) étant configuré pour détecter une position du premier élément de détection de position (61a), et
- un premier plot de positionnement (64a), le premier plot de positionnement (64a) étant maintenu en position par rapport à la rainure de positionnement (60) dans une première position, le premier capteur de détection de position (63a) étant fixé sur le premier plot de positionnement (64a),
le premier plot de positionnement (64a) comprenant au moins une première butée (69a) d'arrêt de l'élément mobile (59),
**caractérisé**
**en ce que** la rainure de positionnement (60) comprend au moins :
- une première denture interne (65),
- une première surface (60a), la première denture interne (65) étant ménagée sur la première surface (60a),
- une deuxième surface (60b), la deuxième surface (60b) étant opposée à la première surface (60a), et
- une deuxième denture interne (67), la deuxième denture interne (67) étant ménagée sur la deuxième surface (60b),
**en ce que** le premier plot de positionnement (64a) comprend au moins :
- une première portion de denture (66), et
- une deuxième portion de denture (68), la deuxième portion de denture (68) étant opposée à la première portion de denture (66),
**en ce que** la première portion de denture (66) est engagée dans la première denture interne (65),
et **en ce que** la deuxième portion de denture (68) est engagée dans la deuxième denture interne (67).

2. Actionneur électromécanique (4) pour une installation de fermeture (1) selon la revendication 1, **caractérisé**
**en ce que** le premier élément de détection de position (61a) comprend au moins un trou de passage (70),
**en ce que** l'élément mobile (59) comprend au moins un trou de fixation (71),
et **en ce que** l'élément de fixation (62) traverse le trou de passage (70) et est fixé dans le trou de fixation (71).

3. Actionneur électromécanique (4) pour une installation de fermeture (1) selon la revendication 2, **caractérisé en ce que** le trou de passage (70) est de forme oblongue, de sorte à pouvoir ajuster le positionnement du premier élément de détection de position (61a) par rapport à l'élément mobile (59), lors de la fixation de l'élément de fixation (62) dans le trou de fixation (71).

4. Actionneur électromécanique (4) pour une installation de fermeture (1) selon l'une quelconque des revendications 1 à 3, **caractérisé**
**en ce que** le premier élément de détection de position (61a) est un doigt,
**en ce que** le premier capteur de détection de position (63a) est un interrupteur mécanique, le premier capteur de détection de position (63a) comprenant au moins une lame métallique déformable (72),
et **en ce que** le premier élément de détection de position (61a) est configuré pour être mis en appui contre la lame métallique déformable (72), lors de l'entraînement en mouvement de l'élément mobile (59).

5. Actionneur électromécanique (4) pour une installation de fermeture (1) selon l'une quelconque des revendications 1 à 3, **caractérisé**
**en ce que** le premier élément de détection de position (61a) comprend au moins un aimant,
**en ce que** le premier capteur de détection de position (63a) est un capteur à effet Hall, et en ce que le dispositif de détection de position (58) est configuré pour détecter le positionnement du premier élément de détection de position (61a) en vis-à-vis du premier capteur de détection de position (63a), lors de l'entraînement en mouvement de l'élément mobile (59).

6. Actionneur électromécanique (4) pour une installation de fermeture (1) selon l'une quelconque des revendications 1 à 5, **caractérisé**
**en ce que** le dispositif de détection de position (58) comprend, en outre :
- un deuxième élément de détection de position (61b), le deuxième élément de détection de position (61b) étant fixé sur l'élément mobile (59) au moyen d'au moins un autre élément de fixation (62),
- un deuxième capteur de détection de position (63b), le deuxième capteur de détection de position (63b) étant configuré pour détecter une position du deuxième élément de détection de position (61b), et
- un deuxième plot de positionnement (64b), le deuxième plot de positionnement (64b) étant maintenu en position par rapport à la rainure de positionnement (60) dans une deuxième position, la deuxième position étant différente de la première position, le deuxième capteur de détection de position (63b) étant fixé sur le deuxième plot de positionnement (64b),
et **en ce que** le deuxième plot de positionnement (64b) comprend au moins une deuxième butée (69b) d'arrêt de l'élément mobile (59).

7. Installation de fermeture (1) comprenant au moins :
- un portail battant (2), et
- un dispositif d'entraînement motorisé (3),
le portail battant (2) comprenant au moins :
- un pilier (6), et
- un écran (5),
le dispositif d'entraînement motorisé (3) comprenant au moins :
- un actionneur électromécanique (4) conforme à l'une quelconque des revendications 1 à 6, l'actionneur électromécanique (4) étant configuré pour entraîner en déplacement l'écran (5) par un mouvement de rotation, autour d'un axe de rotation (Z).

8. Installation de fermeture (1) selon la revendication 7, **caractérisée en ce que** le portail battant (2) comprend :
- deux piliers (6), et
- deux écrans (5),
**en ce que** le dispositif d'entraînement motorisé (3) comprend :
- deux actionneurs électromécaniques (4), chacun des actionneurs électromécaniques (4) étant configuré pour entraîner en déplacement l'un des écrans (5) par un mouvement de rotation, autour d'un axe de rotation (Z),
**en ce que** chacun des actionneurs électromécaniques (4) est conforme à l'une quelconque des revendications 1 à 6,
et **en ce que** chacun des actionneurs électromécaniques (4) est réversible, de sorte à pouvoir être fixé sur l'un ou l'autre des piliers (6) et à pouvoir être relié mécaniquement à l'un ou l'autre des écrans (5).
